# EUROPÄISCHE PATENTSCHRIFT

(11) **EP 3 020 263 B1**
(45) Veröffentlichungstag und Bekanntmachung des Hinweises auf die Patenterteilung: **16.05.2018**
(21) Anmeldenummer: 15401116.7
(22) Anmeldetag: 11.11.2015
(51) Int. Cl.: A01C 7/04

(54) **SAATKORN-VEREINZELUNGSVORRICHTUNG**
SEED GRAIN SINGULATING DEVICE
DISPOSITIF DE SÉPARATION INDIVIDUELLE DE GRAINES

(30) Priorität: 17.11.2014 DE 102014116731
(43) Veröffentlichungstag der Anmeldung: 18.05.2016
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Mertens, Daniel, 26121 Oldenburg (DE); Wien, Thomas, 28816 Stuhr (DE)

(56) Entgegenhaltungen:
- EP-A1- 0 195 900
- DE-A1-102006 016 406
- DE-B3-102008 056 526

## Beschreibung

Die Erfindung betrifft eine Saatkorn-Vereinzelungsvorrichtung umfassend eine Vereinzelungsscheibe oder eine Vereinzelungstrommel mit Vereinzelungsbohrungen und eine Reinigungseinrichtung zum Reinigen der Vereinzelungsbohrungen.

Solche Saatkorn-Vereinzelungsvorrichtungen sind aus dem Stand der Technik bekannt. Saatkorn-Vereinzelungsvorrichtungen kommen zum Einsatz, wenn Saatgut mittels Einzelkornsaat ausgebracht werden soll, beispielsweise bei Mais. Dabei werden die Saatkörner pneumatisch mittels Vereinzelungsbohrungen in einer rotierenden Vereinzelungsscheibe oder in dem Mantel einer Vereinzelungstrommel transportiert. Beispielsweise wird ein Unterdruck so an die Fläche mit den Vereinzelungsbohrungen angelegt, dass die Vereinzelungsbohrungen Ansauglöcher für die Saatkörner bilden. Das heißt, dass die Saatgutkörner angesaugt und an den Positionen der Vereinzelungsbohrungen gehalten werden. Die Saatgutkörner können dann nacheinander von den Vereinzelungsbohrungen abgenommen und ausgebracht werden.

Die Vereinzelungsbohrungen können aus verschiedenen Gründen verschmutzt, insbesondere auch verstopft werden. Beispielsweise können sich Saatkörner darin verklemmen oder Staub kann sich zusammen mit Feuchtigkeit ablagern. Diese Verschmutzung reduziert die Wirkung der Vereinzelungsbohrungen als Ansauglöcher, so dass an manchen Stellen keine Saatkörner mehr transportiert werden. Solche Fehlstellen verursachen wiederum, dass die Saatkörner nicht in regelmäßigen Abständen von der Vereinzelungsscheibe bzw. Vereinzelungstrommel abgenommen werden können.

Daher müssen die Vereinzelungsbohrungen gereinigt werden. Dafür werden Reinigungseinrichtungen benutzt, beispielsweise Besen, die in Kontakt mit der rotierenden Vereinzelungsscheibe sind. Bisher war bekannt, Vereinzelungsbohrungen während des gesamten Betriebes zu reinigen. Ein dauerhafter Betrieb der Reinigungseinrichtungen führt jedoch zu einem hohen Energieaufwand und, im Falle kontaktbehafteter Reinigung, auch zu starkem Verschleiß.

Eine derartige Saatkorn-Vereinzelungsvorrichtung wird in der DE°10°2008°056°526°B3 beschrieben. Die Vereinzelungsbohrungen werden hier durch Druckluftstöße intervallweise gereinigt.

Es ist Aufgabe der Erfindung, eine Saatkorn-Vereinzelungsvorrichtung mit einer verbesserten ressourcenschonenderen Reinigungseinrichtung bereit zu stellen. Die Aufgabe wird bei der Saatkorn-Vereinzelungsvorrichtung der eingangs genannten Art erfindungsgemäß gelöst durch eine Steuereinrichtung (13), die die Reinigungseinrichtung (8) in Folge eines Detektierens von teilweise oder vollständig verstopften Vereinzelungsbohrungen (12) durch einen optischen Detektor (9) oder in Folge eines Detektierens eines ungleichmäßigen Saatgutstroms durch eine Saatgutleitung (7) durch einen Qualitätsdetektor (10) aktiviert.

Durch den Intervallbetrieb ist die Reinigungseinrichtung nicht dauerhaft in Betrieb und verbraucht weniger Energie. Zugleich ist, sofern die Reinigung kontaktbehaftet erfolgt, der Abrieb geringer als bei einer durchgehenden Reinigung. Mit anderen Worten die Reinigungseinrichtung wird im Idealfall nur dann aktiviert, wenn auch tatsächlich Verschmutzungen und/oder Verstopfungen beseitigt werden müssen.

Die Saatkorn-Vereinzelungsvorrichtung umfasst erfindungsgemäß entweder einen optischen Detektor und eine Steuereinrichtung, die die Reinigungseinrichtung, in Folge eines Detektierens von teilweise oder vollständig verstopften Vereinzelungsbohrungen durch den optischen Detektor, aktiviert. Der optische Detektor kann eine Kamera, eine Lichtschranke und/oder einen Optogeber umfassen. Der optische Detektor kann in jedem der beiden Teilbereiche des Gehäuses angeordnet sein. Typischerweise ist er jedoch in dem Teilbereich angeordnet, in dem das Saatgut eingebracht und entnommen wird. Gegebenenfalls können auch andere geeignete optische Detektoren zum Einsatz kommen.

Wird die Reinigungseinrichtung (ausschließlich) basierend auf einem Taktsignal aktiviert, kann das Problem auftreten, dass die Ausbringqualität schwankt, da gegebenenfalls zwischen den Reinigungszyklen Verstopfungen relativ lange nicht behoben werden. Wird jedoch der oben beschriebene optische Detektor verwendet, ist gewährleistet, dass eine Verstopfung vergleichsweise schnell erkannt und behoben wird.

Je nach eingesetztem Saatgut können Verstopfungen häufiger oder weniger häufig auftreten. Wenn hierfür empirische oder theoretische Werte vorliegen, können die Zeitintervalle entsprechend eingestellt werden.

Die Saatkorn-Vereinzelungsvorrichtung umfasst erfindungsgemäß alternativ einen Qualitätsdetektor und eine Steuereinrichtung, die die Reinigungseinrichtung, in Folge eines Detektierens eines ungleichmäßigen Saatgutstroms durch eine Saatgutleitung durch den Qualitätsdetektor, aktiviert. Der Qualitätsdetektor kann eine Kamera, eine Lichtschranke und/oder einen Optogeber umfassen, die die Innenseite der Saatgutleitung abbilden. Auch andere geeignete Qualitätsdetektoren können eingesetzt werden.

Die Koppelung der Aktivierung der Reinigungseinrichtung an den Saatgutstrom hat den Vorteil, dass beispielsweise die Taktung erhöht werden kann, wenn der Saatgutstrom zu ungleichmäßig ist, da das auf eine Verstopfung von Vereinzelungsbohrungen hindeutet. Diese Lösung kann, je nach System immer noch technisch leichter umzusetzen sein, als ein Detektor, der die Verstopfungen selbst erkennt.

Die Vereinzelungsscheibe kann in Form einer runden Platte ausgebildet und rotierbar angeordnet sein. Vereinzelungsbohrungen verbinden die beiden Seiten der Platte. Im Normalbetrieb kann die Vereinzelungsscheibe vertikal angeordnet sein. Mit anderen Worten rotiert im Normalbetrieb die Vereinzelungsscheibe um eine horizontale Achse durch ihren Mittelpunkt. Die Vereinzelungsbohrungen können beispielsweise umfänglich auf der Vereinzelungsscheibe angeordnet sein, insbesondere äquidistant.

Die Vereinzelungstrommel kann in Form eines rotierbar angeordneten Hohlzylinders ausgebildet sein, durch dessen Mantelfläche sich die Vereinzelungsbohrungen von der Innenseite des Hohlzylinders zur Außenseite des Hohlzylinders erstrecken. Im Normalbetrieb kann die Vereinzelungstrommel um die Achse des Hohlzylinders rotieren, wobei diese Achse horizontal angeordnet ist. Die Vereinzelungsbohrungen können entlang eines Kreisrings in dem Zylindermantel des Hohlzylinders angeordnet sein, insbesondere äquidistant.

Es können eine oder mehrere Reihen von Vereinzelungsbohrungen vorgesehen sein. Die Vereinzelungsbohrungen können beispielsweise runde oder eckige Querschnitte aufweisen. Der Durchmesser der Vereinzelungsbohrungen wird entsprechend der Größe der auszubringenden Saatgutkörner gewählt, so dass sie kleiner sind als die durchschnittliche Größe der Saatgutkörner.

Die Vereinzelungsscheibe bzw. die Vereinzelungstrommel können in einem Vereinzelungsgehäuse angeordnet sein, wobei jeweils die Vereinzelungsscheibe bzw. die Wand der Vereinzelungstrommel zwei Teilbereiche des Vereinzelungsgehäuses baulich und luftdicht voneinander trennen, so dass nur noch durch die Vereinzelungsbohrungen Gas, insbesondere Luft, zwischen den beiden Teilbereichen des Vereinzelungsgehäuses strömen kann. Die Reinigungseinrichtung kann in einem der beiden oder beiden Teilbereichen des Gehäuses angeordnet sein. Typischerweise ist sie jedoch in dem Teilbereich angeordnet, in dem das Saatgut eingebracht und entnommen wird.

Das Vereinzelungsgehäuse, in dem die Vereinzelungstrommel bzw. die Vereinzelungsscheibe angeordnet sind kann jeweils im Wesentlichen zylinderförmig mit einem größeren Radius als die Vereinzelungstrommel bzw. die Vereinzelungsscheibe ausgebildet sein. In diesem Fall ist die Drehachse der Vereinzelungsscheibe bzw. der Vereinzelungstrommel typischerweise koaxial mit der Zylinderachse der Vereinzelungstrommel angeordnet.

Der Teilbereich, in den im bestimmungsgemäßen Betrieb die Saatkörner eingebracht und entnommen werden kann dann einen höheren Druck aufweisen als der andere Teilbereich. Beispielsweise kann in dem einen Teilbereich (mit den Saatkörnern) ein Überdruck oder in dem anderen Teilbereich (ohne die Saatkörner) ein Unterdruck erzeugt werden.

Bei der Vereinzelungstrommel ist typischerweise der Teilbereich im Inneren des Hohlzylinders der Teilbereich mit dem niedrigeren Druck. Die Saatkörner werden dann in einen Teilbereich des Vereinzelungsgehäuses außerhalb der Vereinzelungstrommel eingebracht und aus diesem entnommen.

Die verwendeten Saatkörner können alle Saatkörner umfassen, die mittels Einzelkornsaat ausgebracht werden, beispielsweise Mais oder Rüben.

Unter Intervallbetrieb wird hier verstanden, dass die Reinigung diskontinuierlich erfolgt. Mit anderen Worten wird die Reinigungseinrichtung in bestimmten Zeitintervallen aktiviert, den Reinigungsintervallen. In den Reinigungsintervallen findet eine Reinigung statt. Zwischen aufeinanderfolgenden Reinigungsintervallen ist jeweils ein Intervall vorgesehen, in dem keine Reinigung erfolgt, wobei dieses Intervall größer als 0 s ist. Im Idealfall, wie bereits vor erwähnt, ist die Reinigungseinrichtung nur dann aktiv, wenn tatsächlich Verschmutzungen und/oder Verstopfungen der Vereinzelungsbohrungen beseitigt werden müssen

Die Reinigungseinrichtung kann zur kontaktbehafteten Reinigung ausgebildet sein, beispielsweise mittels Besen, Ausstoßkolben oder Abstreifern. Diese Reinigungsmethode ist technisch einfach, hat aber den Nachteil, dass es im Betrieb zu starkem Materialverschleiß kommt.

Die Reinigungseinrichtung kann zum kontaktlosen Reinigen der Vereinzelungsbohrungen ausgebildet sein. Kontaktloses Reinigen ist vorteilhaft, weil dabei der Materialverschleiß bei der Vereinzelungsscheibe und der Reinigungseinrichtung reduziert wird.

Die Reinigungseinrichtung kann eine pneumatische Reinigungseinrichtung mit einer oder mehreren Druckluftdüsen sein, die derart ausgebildet und angeordnet sind, dass eine oder mehrere Vereinzelungsbohrungen jeweils mit einem Druckluftstoß gereinigt werden können. Diese Art des kontaktlosen Reinigens ist vorteilhaft, da es gezielt auf einen festgelegten Bereich gerichtet ist, nämlich auf die Vereinzelungsbohrungen. Unter einem Druckluftstoß wird dabei verstanden, dass Druckluft nur Impulsartig abgegeben wird.

Wenn die Reinigungseinrichtung mehrere Druckluftdüsen umfasst, können diese umfänglich an der Vereinzelungsscheibe angeordnet sein. Jede der Druckluftdüsen kann auf der Atmosphärendruck-Seite oder an der Vakuum-Seite der Vereinzelungsscheibe angeordnet sein.

Die Reinigungseinrichtung kann alternativ oder zusätzlich Düsen zum Aufbringen von Reinigungsflüssigkeit, beispielsweise Wasser oder Seifenwasser, umfassen. Diese Düsen können, vor allem wenn der Betrieb beendet werden soll für eine gründliche Abschlussreinigung eingesetzt werden.

Die Druckluftdüsen und/oder die Düsen zum Aufbringen von Reinigungsflüssigkeit können auch derart ausgebildet sein, dass sie, beispielsweise automatisch nach einer vorgegebenen Zeit oder einem vorgegebenen zurückgelegten Weg einer Sämaschine mit der Vereinzelungseinrichtung oder ausgelöst durch das Signal eines Detektors oder den Betreiber der Sämaschine, aktiviert werden.

Die Saatkorn-Vereinzelungsvorrichtung kann eine Steuereinrichtung umfassen, die die Reinigungseinrichtung, basierend auf einem Taktsignal in vorgegebenen Zeitintervallen, aktiviert. Das Taktsignal kann durch einen Taktgeber erzeugt werden, beispielsweise einem Oszillator, wie einem Schwingquarz.

In diesem Fall muss die Saatkorn-Vereinzelungsvorrichtung keinen Detektor umfassen, der zum Detektieren von teilweise oder vollständig verstopften Vereinzelungsbohrungen ausgebildet ist. Ein vorgegebenes Zeitintervall zu verwenden bietet also eine technisch einfache Lösung, um den Energieverbrauch und gegebenenfalls den Verschleiß zu reduzieren.

Die Zeitintervalle können basierend auf der Umdrehungszahl der Vereinzelungsscheibe bzw. der Vereinzelungstrommel und/oder der Anordnung der Vereinzelungsbohrungen auf der Vereinzelungsscheibe bzw. in der Vereinzelungstrommel eingestellt werden. Dadurch wird sichergestellt, dass Vereinzelungsbohrungen nicht doppelt gereinigt werden und dass keine Vereinzelungsbohrungen beim Reinigen ausgelassen werden. Die Zeitintervalle können basierend auf der Art des Saatguts eingestellt werden. Manches Saatgut neigt mehr zur Verstopfung als anderes Saatgut, was dadurch berücksichtigt werden kann.

Die Steuereinrichtung kann zum Aktivieren der Düsen zum Aufbringen von Reinigungsflüssigkeit und der Druckluftdüsen derart, dass die Aktivierung der Druckluftdüsen unmittelbar nach der Aktivierung der Düsen zum Aufbringen von Reinigungsflüssigkeit erfolgt, ausgebildet sein. Die Vereinzelungsscheibe kann also sofort wieder getrocknet werden. So kann beispielsweise beim Wenden der Sämaschine, wenn kein Saatgut abgelegt wird, eine gründlichere Reinigung erfolgen als während der Geradeausfahrt, wenn Saatgut abgelegt wird.

Die im Zusammenhang mit der Vorrichtung beschriebenen Merkmale können mit dem im Folgenden beschriebenen Verfahrensmerkmalen beliebig kombiniert werden. Die im Zusammenhang mit der Vorrichtung beschriebenen Vorteile werden im Zusammenhang mit den entsprechenden Verfahrensmerkmalen nicht wiederholt.

Das erfindungsgemäße Verfahren zum Reinigen von Vereinzelungsbohrungen in einer Vereinzelungsscheibe oder einer Vereinzelungstrommel mittels einer Reinigungsvorrichtung umfasst, dass die Vereinzelungsbohrungen im Intervallbetrieb gereinigt werden.

Das Reinigen kann kontaktbehaftet oder kontaktlos erfolgen. Eine oder mehrere Vereinzelungsbohrungen können jeweils mit einem Druckluftstoß aus einer oder mehreren Druckluftdüsen gereinigt werden.

Die Reinigungseinrichtung kann automatisch aktiviert werden. Insbesondere kann die Reinigungseinrichtung in gleichbleibenden oder variablen Zeitintervallen aktiviert werden.

Die Reinigungseinrichtung kann basierend auf einem Taktsignal in vorgegebenen Zeitintervallen aktiviert werden. Die Zeitintervalle können basierend auf der Umdrehungszahl bzw. Rotationsgeschwindigkeit der Vereinzelungsscheibe bzw. Vereinzelungstrommel und/oder der Anordnung der Vereinzelungsbohrungen auf der Vereinzelungsscheibe bzw. in der Vereinzelungstrommel eingestellt werden. Die Zeitintervalle können basierend auf der Art des Saatguts eingestellt werden.

Die Reinigungseinrichtung wird in Folge eines Detektierens von teilweise oder vollständig verstopften Vereinzelungsbohrungen durch einen optischen Detektor aktiviert oder basierend auf der detektierten Vereinzelungsqualität aktiviert. Insbesondere können die Zeitintervalle basierend auf der Vereinzelungsqualität eingestellt werden.

Merkmale und Vorteile der Erfindung werden nachfolgend anhand der Fig. weiter erläutert. Dabei zeigen:
- Fig. 1: eine schematische, nicht maßstabsgetreue Darstellung eines Teils einer Einzelkornsämaschine;
- Fig. 2a und 2b: schematische, nicht maßstabsgetreue Darstellungen einer ersten Ausführungsform der Saatkorn-Vereinzelungsvorrichtung; und
- Fig. 3a und 3b: schematische, nicht maßstabsgetreue Darstellungen einer zweiten Ausführungsform der Saatkorn-Vereinzelungsvorrichtung.

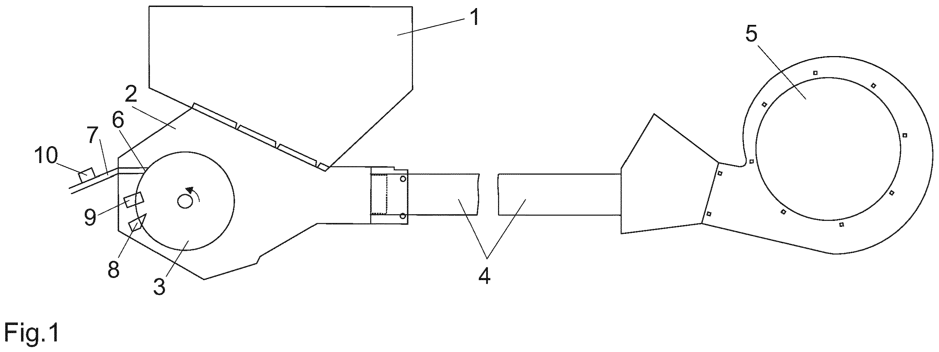

Fig. 1 zeigt beispielhaft, wie die Saatkorn-Vereinzelungsvorrichtung in einer pneumatischen Sämaschine angeordnet sein kann. Die pneumatische Sämaschine in Fig. 1 ist beispielsweise als Einzelkornsämaschine ausgebildet. Sie weist den Vorratsbehälter 1 mit dem zugeordneten Vereinzelungsgehäuse 2 auf. In diesem Vereinzelungsgehäuse 2 ist eine Vereinzelungstrommel oder eine Vereinzelungsscheibe 3 angeordnet. Der Vorratsbehälter 1 und das Vereinzelungsgehäuse 2 sind druckdicht ausgebildet. Ein Luftleitungssystem 4 verbindet den Vorratsbehälter und das Vereinzelungsgehäuse mit einem Gebläse 5. Der Vorratsbehälter, das Gebläse und das Luftleitungssystem werden hier nicht als Teil der Saatgutvereinzelungsvorrichtung betrachtet. Eine Saatgutleitung 7 verbindet eine Einlassöffnung 6 mit hier nicht gezeigten Säscharen oder anderen Ausbringvorrichtungen. Optional kann ein Saatkornablöseelement (in der Figur nicht dargestellt) vorgesehen sein.

Hier sind ebenfalls eine Reinigungseinrichtung 8 umfassend eine Druckluftdüse, ein auf eine Reihe mit Vereinzelungsbohrungen (hier nicht gezeigt) in der Vereinzelungsscheibe bzw. der Vereinzelungstrommel gerichteter optischer Detektor 9, beispielsweise eine Kamera, und ein auf die Innenseite der Saatgutleitung gerichteter Qualitätsdetektor 10, beispielsweise eine Lichtschranke, dargestellt. Es kann jedoch auch nur ein optischer Detektor 9 oder ein Qualitätsdetektor 10 vorgesehen sein.

Die Druckluftdüse und die Detektoren sind hier ortsfest angeordnet. Sie können jeweils jedoch auch bewegbar angeordnet sein.

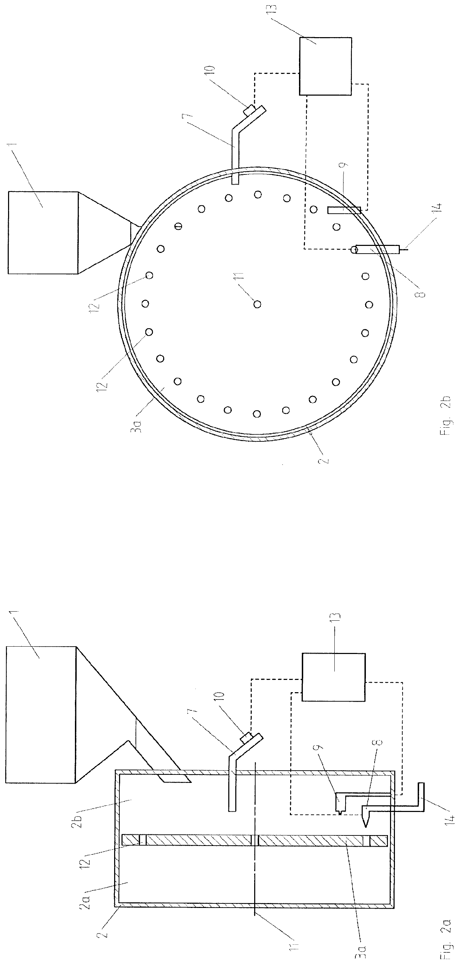

In Fig. 2a und 2b ist eine Detailansicht der im Zusammenhang mit Fig. 1 beschriebenen Saatkorn-Vereinzelungsvorrichtung mit einer Vereinzelungsscheibe 3a in einer Ansicht senkrecht zur Rotationsachse 11 bzw. entlang der Rotationsachse gezeigt. Die Vereinzelungsscheibe weist mehrere äquidistant entlang einer Kreislinie verlaufenden, umlaufenden Reihe angeordnete Vereinzelungsbohrungen 12 durch die Vereinzelungsscheibe auf. Es können auch mehrere Reihen vorgesehen sein.

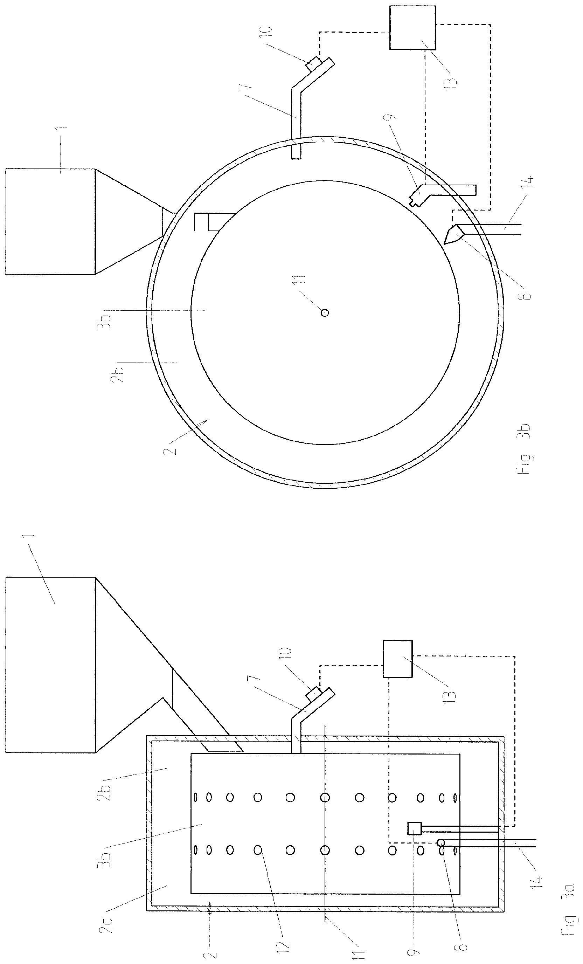

In Fig. 3a und 3b ist eine Detailansicht der im Zusammenhang mit Fig. 1 beschriebenen Saatkorn-Vereinzelungsvorrichtung mit einer Vereinzelungstrommel 3 in einer Ansicht senkrecht zur Rotationsachse 11 bzw. entlang der Rotationsachse gezeigt. Die Vereinzelungstrommel weist hier mehrere äquidistant entlang einer Kreislinie verlaufende, in umlaufenden Reihen angeordnete Vereinzelungsbohrungen 12 auf. Es kann jedoch auch nur eine Reihe vorgesehen sein. Wenn mehrere Reihen vorliegen, kann es sinnvoll sein, pro Reihe mindestens einen optischen Detektor und eine Druckluftdüse vorzusehen (hier nicht dargestellt).

In Fig. 2 und 3 ist ebenfalls zu erkennen, dass das Vereinzelungsgehäuse jeweils in Teilbereiche 2a und 2b unterteilt ist, wobei der Saatgutbehälter mit einem Teilbereich 2b verbunden ist und die Saatgutleitung 7 sowie die der optische Detektor und die Druckluftdüse ebenfalls in diesem Teilbereich angeordnet ist. Der optische Detektor und die Druckluftdüse können jedoch im Fall der Vereinzelungsscheibe auch im Teilbereich 2a angeordnet sein.

In beiden Fig. en ist zu erkennen, dass jeweils die Druckluftdüse, der optische Detektor und der Qualitätsdetektor mit einer Steuervorrichtung 13 verbunden sind. Hier kann es sich um jede beliebige Form einer Datenverbindung handeln, insbesondere um eine kontaktbehaftete oder kontaktlose Datenverbindung. Alternativ oder zusätzlich kann die Steuereinrichtung und/oder die Druckluftdüse mit einem hier nicht gezeigten Taktgeber verbunden sein. Zudem ist die Druckluftdüse hier mit einer Druckluftleitung 14 verbunden, die zu einer hier nicht gezeigten Druckluftquelle führt. Die Druckluftquelle separat vorliegen oder beispielsweise Teil des Gebläses 5 oder mit dem Gebläse verbunden sein.

Es sei angemerkt, dass in den Fig. 2 und 3 die Verbindung zum Gebläse jeweils nicht eingetragen ist, um das Bild zu vereinfachen. Zudem kann das hier zylinderförmig dargestellte Gehäuse auch jede andere Form haben, wie beispielsweise in Fig. 1.

In Fig. 2 und 3 sind alternativ andere Anordnungen der Vereinzelungsbohrungen, beispielsweise nicht äquidistant oder nicht umlaufend angeordnet oder nicht kreisförmig angeordnet möglich.

Die beiden oben beschriebenen Saatkorn-Vereinzelungsvorrichtungen können erfindungsgemäß wie folgt betrieben und gereinigt werden.

Im Vorratsbehälter 1 befinden sich Saatkörner, die in das Vereinzelungsgehäuse 2 eingebracht werden, zum Beispiel mittels Schwerkraft und/oder, wie hier, mittels Druckluft. Hier werden beispielsweise über das Gebläse 5 ein Teilbereich 2b des Vereinzelungsgehäuses und der Vorratsbehälter mit einem Überdruck (also ein Druck, der größer als der Atmosphärendruck ist), beaufschlagt.

In dem Vereinzelungsgehäuse rotiert die Vereinzelungsscheibe 3a bzw. die Vereinzelungstrommel 3b und bewegt sich dabei durch einen Saatkornvorrat, der sich in einem unteren Bereich des Vereinzelungsgehäuses ansammelt. Wenn die Vereinzelungsbohrungen durch den Saatgutvorrat bewegt werden, lagern sich die Saatkörner jeweils einzeln an den Vereinzelungsbohrungen an, da eine Druckdifferenz an die Vereinzelungsbohrungen angelegt wird.

In diesem Fall werden die Vereinzelungsbohrungen aufgrund der Tatsache, dass ein erster Bereich 2a des Vereinzelungsgehäuses 2 unter Atmosphärendruck steht und ein zweiter Bereich des Vereinzelungsgehäuses 2b mit einem Überdruck beaufschlagt wird, mit einer Druckdifferenz beaufschlagt. In diesem Fall entsteht auch ein Luftstrom durch die Saatgutleitung 7 zu den Säscharen. Alternativ kann der erste Teilbereich 2a mit einem Unterdruck beaufschlagt werden und ein zweiter Teilbereich 2b unter Atmosphärendruck stehen. Im Fall der Vereinzelungstrommel 3 ist der Teilbereich 2b mit dem höheren Druck typischerweise außerhalb der Vereinzelungstrommel angeordnet und der andere Teilbereich 2a im Inneren der Vereinzelungstrommel.

Generell ist der Teilbereich 2b des Vereinzelungsgehäuses 2, in den das Saatgut eingebracht wird, der Teilbereich mit dem höheren Druck, so dass ein Luftstrom vom höheren Druckbereich in den niedrigeren Druckbereich die Saatkörner an die Vereinzelungsbohrungen ansaugt und dort gehalten werden.

Die Saatkörner werden dann durch die Rotation der Vereinzelungsscheibe bzw. der Vereinzelungstrommel weitertransportiert, bis sie auf Höhe der Einlassöffnungen 6 der Saatgutleitung 7 an die Saatgutleitung übergeben werden und von dort zu den Säscharen transportiert werden. Dazu kann zum Beispiel mit dem Saatkornablöseelement die Druckdifferenz an der Vereinzelungsbohrung, von der ein Saatgutkorn entfernt werden soll, unterbrochen werden, so dass sich die vereinzelten Saatkörner von der Vereinzelungstrommel bzw. von der Vereinzelungsscheibe lösen. Alternativ kann ein Abstreifer das Saatkorn von der Vereinzelungsöffnung abstreifen.

Hierdurch lösen sich die vereinzelten Saatkörner von der Vereinzelungstrommel bzw. von der Vereinzelungsscheibe 3 und werden durch den in dem Saatgutbehälter 1 und dem Bereich 2b des Vereinzelungsgehäuses 2 herrschenden Überdruck erzeugte Luftströmung in den Saatgutleitungen 7 von der Luftströmung mitgerissen und über die Saatgutleitungen 7 zu den daran angeschlossenen, hier nicht dargestellten Säscharen mitgerissen.

Wenn an jeder Vereinzelungsbohrung ein Saatkorn angelagert wird, werden die Saatkörner in gleichmäßigen Abständen in die Saatgutleitung abgegeben und hohe Ablagequalität erzielt. Im Laufe des Betriebs kann sich jedoch in den Vereinzelungsbohrungen Schmutz ablagern. Durch Staub und ganze oder gesplitterte Saatkörner, die sich in den Vereinzelungsbohrungen verklemmen, können die Vereinzelungsbohrungen ganz oder teilweise verstopft werden. So kann es dazu kommen, dass nicht mit jeder Vereinzelungsbohrung ein Saatkorn mitgeführt wird. Dadurch sind die Abstände zwischen den einzelnen Saatkörnern, die den Saatgutleitungen zugeführt werden nicht mehr gleichmäßig und die Ablagequalität sinkt, sofern die Vereinzelungsbohrungen nicht rechtzeitig gereinigt wird.

Wenn der optische Detektor 9 vorgesehen ist, der auf die Reihe der Vereinzelungsbohrungen gerichtet ist, kann dieser kontinuierlich die Vereinzelungsbohrungen überwachen und, wenn er detektiert, dass eine Vereinzelungsbohrung zu stark verschmutzt ist, ein Signal an die Steuervorrichtung senden. Der optische Detektor kann zum Beispiel dann bestimmen, dass eine Vereinzelungsbohrung zu stark verschmutzt ist, wenn kein Saatkorn detektiert wird, dazu muss er derart angeordnet sein, dass er die Vereinzelungsbohrungen nach der Saatgutaufnahme erfasst. Alternativ kann der optische Detektor bestimmen, dass eine Vereinzelungsbohrung zu stark verschmutzt ist, in dem die Größe der gemessenen Öffnung an der Position der Vereinzelungsbohrung mit der Sollgröße der Vereinzelungsbohrung verglichen wird.

Wenn der Qualitätsdetektor 10 vorgesehen ist, kann bestimmt werden, ob die Saatkörner in gleichmäßigen Abständen durch die Saatgutleitungen gefördert werden. Dazu ist beispielsweise eine Lichtschranke geeignet. Wenn der Saatgutstrom nicht gleichmäßig ist, also die Abstände nicht gleichmäßig sind, kann der Qualitätsdetektor bestimmen, dass eine oder mehrere Vereinzelungsbohrungen zu stark verschmutzt sind.

Der optische Detektor und/oder der Qualitätsdetektor kann ein Signal an die Steuervorrichtung senden, wenn eine zu starke Verschmutzung detektiert wird. Die Steuereinrichtung steuert dann die Druckluftdüse 8 so an, dass sie einen Druckluftstoß entweder sukzessive auf alle Vereinzelungsbohrungen oder speziell auf die verschmutzte Vereinzelungsbohrung abgibt. Der Luftstoß entfernt gegebenenfalls Verschmutzungen aus den Vereinzelungsbohrungen.

Wenn eine spezielle Vereinzelungsbohrung gereinigt werden soll, muss basierend auf der Position der Druckluftdüse und der Geometrie und Rotationsgeschwindigkeit der Vereinzelungsscheibe bestimmt werden, wann die entsprechende Vereinzelungsbohrung bei der Druckluftdüse sein wird und dann zu diesem Zeitpunkt der Luftstoß ausgelöst werden. Im Fall des optischen Detektors wird dazu die Position des optischen Detektors relativ zur Druckluftdüse benötigt, so dass bestimmt werden kann, wie lange die Vereinzelungsbohrung von dem optischen Detektor zu der Druckluftdüse braucht. Im Fall des Qualitätsdetektors wird für die Berechnung des Zeitpunkts des Druckluftstoßes bestimmt werden, welche Vereinzelungsbohrung einer bestimmten Lücke im Saatgutstrom zuzuordnen ist.

Als Alternative kann auch basierend auf einem Taktsignal und empirischen Werten in bestimmten Zeitabständen ein Druckluftstoß ausgelöst werden. Dann müssen weder der optische Detektor noch der Qualitätsdetektor vorgesehen sein. Es ist auch möglich, dass zusätzlich zu den durch einen der oder beide Detektoren ausgelösten Luftstößen in regelmäßigen, größeren Intervallen eine Reinigung erfolgt, unabhängig von den Werten, die die Detektoren bestimmen. Das kann auch als Absicherung gesehen werden, falls die Detektoren fehlerhafte Werte messen.

Analog zu den oben beschriebenen Druckluftstößen kann eine Reinigung auch mechanisch mit Besen nur zu bestimmten Zeitpunkten, ausgelöst durch die Steuervorrichtung oder ein Taktsignal, erfolgen.

Es versteht sich, dass in den zuvor beschriebenen Ausführungsbeispielen genannte Merkmale nicht auf diese speziellen Kombinationen beschränkt sind, und auch in beliebigen anderen Kombinationen möglich sind.

## Patentansprüche

1. Saatkorn-Vereinzelungsvorrichtung umfassend eine Vereinzelungsscheibe (3a) oder eine Vereinzelungstrommel (3b) mit Vereinzelungsbohrungen (12) und eine Reinigungseinrichtung (8) zum Reinigen der Vereinzelungsbohrungen (12), wobei die Reinigungseinrichtung (8) derart ausgebildet ist, dass die Vereinzelungsbohrungen (12) im Intervallbetrieb gereinigt werden, **dadurch gekennzeichnet, dass** die Saatkorn-Vereinzelungsvorrichtung eine Steuereinrichtung (13) umfasst, die die Reinigungseinrichtung (8), in Folge eines Detektierens von teilweise oder vollständig verstopften Vereinzelungsbohrungen (12) durch einen optischen Detektor (9), oder, in Folge eines Detektierens eines ungleichmäßigen Saatgutstroms durch eine Saatgutleitung (7) durch einen Qualitätsdetektor (10), aktiviert.

2. Saatkorn-Vereinzelungsvorrichtung nach Anspruch 1, wobei die Reinigungseinrichtung (8) zum kontaktlosen Reinigen der Vereinzelungsbohrungen (12) ausgebildet ist.

3. Saatkorn-Vereinzelungsvorrichtung nach Anspruch 1 oder 2, wobei die Reinigungseinrichtung (8) eine pneumatische Reinigungseinrichtung (8) mit einer oder mehreren Druckluftdüsen ist, die derart ausgebildet und angeordnet sind, dass eine oder mehrere Vereinzelungsbohrungen (12) jeweils mit einem Druckluftstoß gereinigt werden können.

4. Saatkorn-Vereinzelungsvorrichtung nach einem der vorangegangenen Ansprüche, umfassend eine Steuereinrichtung (13), die die Reinigungseinrichtung (8), basierend auf einem Taktsignal in vorgegebenen Zeitintervallen, aktiviert.

5. Saatkorn-Vereinzelungsvorrichtung nach Anspruch 4, wobei die Zeitintervalle basierend auf der Umdrehungszahl der Vereinzelungsscheibe (3a) bzw. Vereinzelungstrommel (3b) und/oder der Anordnung der Vereinzelungsbohrungen (12) auf der Vereinzelungsscheibe (3a) bzw. in der Vereinzelungstrommel (3b) und/oder basierend auf der Art des Saatguts eingestellt werden.

6. Saatkorn-Vereinzelungsvorrichtung nach einem der vorangegangenen Ansprüche, **dadurch gekennzeichnet, dass** die Reinigungseinrichtung (8) zumindest auf einer Seite der Vereinzelungsscheibe (3a) oder der Vereinzelungstrommel (3b) angeordnet ist.

7. Verfahren zum Reinigen von Vereinzelungsbohrungen (12) in einer Vereinzelungsscheibe (3a) oder einer Vereinzelungstrommel (3b) mittels einer Reinigungsvorrichtung, wobei die Vereinzelungsbohrungen (12) im Intervallbetrieb gereinigt werden, **dadurch gekennzeichnet, dass** die Reinigungseinrichtung (8) in Folge eines Detektierens von teilweise oder vollständig verstopften Vereinzelungsbohrungen (12) durch einen optischen Detektor (9) oder basierend auf der detektierten Vereinzelungsqualität aktiviert wird.

8. Verfahren nach Anspruch 7, wobei das Reinigen kontaktlos erfolgt.

9. Verfahren nach Anspruch 7 oder 8, wobei eine oder mehrere Vereinzelungsbohrungen (12) jeweils mit einem Druckluftstoß aus einer oder mehreren Druckluftdüsen gereinigt werden.

10. Verfahren nach einem der Ansprüche 7 bis 9, wobei die Reinigungseinrichtung (8), basierend auf einem Taktsignal in vorgegebenen Zeitintervallen aktiviert wird.

11. Verfahren nach Anspruch 10, wobei die Zeitintervalle basierend auf der Umdrehungszahl der Vereinzelungsscheibe (3a) bzw. der Vereinzelungstrommel (3b) und/oder der Anordnung der Vereinzelungsbohrungen (12) auf der Vereinzelungsscheibe (3a) bzw. in der Vereinzelungstrommel (3b) und/oder basierend auf der Art des Saatguts eingestellt werden.

## Claims

1. Seed grain singulating apparatus, comprising a singulating disc (3a) or a singulating drum (3b) with singulating bores (12), and comprising a cleaning device (8) for cleaning the singulating bores (12), wherein the cleaning device (8) is designed such that the singulating bores (12) are cleaned at intervals, **characterized in that** the seed grain singulating apparatus comprises a control device (13) which activates the cleaning device (8) as a result of a detection of partially or fully blocked singulating bores (12) by means of an optical detector (9) or as a result of a detection of a non-uniform seed grain flow through a seed grain line (7) by means of a quality detector (10).

2. Seed grain singulating apparatus according to Claim 1, wherein the cleaning device (8) is designed for contactlessly cleaning the singulating bores (12).

3. Seed grain singulating apparatus according to Claim 1 or 2, wherein the cleaning device (8) is a pneumatic cleaning device (8) with one or more compressed-air nozzles, which are designed and arranged such that one or more singulating bores (12) can be cleaned in each case by means of a blast of compressed air.

4. Seed grain singulating apparatus according to one of the preceding claims, comprising a control device (13) which activates the cleaning device (8) at predefined time intervals on the basis of a clock signal.

5. Seed grain singulating apparatus according to Claim 4, wherein the time intervals are set on the basis of the rotational speed of the singulating disc (3a) or singulating drum (3b) and/or on the basis of the arrangement of the singulating bores (12) on the singulating disc (3a) or in the singulating drum (3b) and/or on the basis of the type of seed grain.

6. Seed grain singulating apparatus according to one of the preceding claims, **characterized in that** the cleaning device (8) is arranged at least on one side of the singulating disc (3a) or of the singulating drum (3b) .

7. Method for cleaning singulating bores (12) in a singulating disc (3a) or in a singulating drum (3b) by means of a cleaning apparatus, wherein the singulating bores (12) are cleaned at intervals, **characterized in that** the cleaning device (8) is activated as a result of a detection of partially or fully blocked singulating bores (12) by means of an optical detector (9) or on the basis of the detected singulating quality.

8. Method according to Claim 7, wherein the cleaning is performed contactlessly.

9. Method according to Claim 7 or 8, wherein one or more singulating bores (12) are cleaned in each case by means of a blast of compressed air from one or more compressed-air nozzles.

10. Method according to one of Claims 7 to 9, wherein the cleaning device (8) is activated at predefined time intervals on the basis of a clock signal.

11. Method according to Claim 10, wherein the time intervals are set on the basis of the rotational speed of the singulating disc (3a) or singulating drum (3b) and/or on the basis of the arrangement of the singulating bores (12) on the singulating disc (3a) or in the singulating drum (3b) and/or on the basis of the type of seed grain.

## Revendications

1. Système de séparation de graines, comprenant un disque de séparation (3a) ou un tambour de séparation (3b) muni d'orifices de séparation (12) et d'un dispositif de nettoyage (8) destiné à nettoyer les orifices de séparation (12), le dispositif de nettoyage (8) étant configuré de telle sorte que les orifices de séparation (12) sont nettoyés selon un régime intermittent, **caractérisé en ce que** le système de séparation de graines comprend un dispositif de commande (13) qui active le dispositif de nettoyage (8) consécutivement à une détection d'orifices de séparation (12) partiellement ou entièrement obstrués par un détecteur optique (9), ou consécutivement à une détection d'un flux de graines irrégulier à travers une conduite à graines (7) par un détecteur de qualité (10) .

2. Système de séparation de graines selon la revendication 1, le dispositif de nettoyage (8) étant configuré pour le nettoyage sans contact des orifices de séparation (12).

3. Système de séparation de graines selon la revendication 1 ou 2, le dispositif de nettoyage (8) étant un dispositif de nettoyage (8) pneumatique comprenant une ou plusieurs buses à air comprimé, lesquelles sont configurées et disposées de telle sorte qu'un ou plusieurs orifices de séparation (12) peuvent respectivement être nettoyés avec un court jet d'air comprimé.

4. Système de séparation de graines selon l'une des revendications précédentes, comprenant un dispositif de commande (13) qui active le dispositif de nettoyage (8) à des intervalles de temps prédéfinis en se basant sur un signal d'horloge.

5. Système de séparation de graines selon la revendication 4, l'intervalle de temps étant réglé en se basant sur la vitesse de rotation du disque de séparation (3a) ou du tambour de séparation (3b) et/ou sur l'arrangement des orifices de séparation (12) sur le disque de séparation (3a) ou dans le tambour de séparation (3b) et/ou en se basant sur le type de semence.

6. Système de séparation de graines selon l'une des revendications précédentes, **caractérisé en ce que** le dispositif de nettoyage (8) est disposé au moins sur un côté du disque de séparation (3a) ou du tambour de séparation (3b).

7. Procédé de nettoyage d'orifices de séparation (12) dans un disque de séparation (3a) ou un tambour de séparation (3b) au moyen d'un système de nettoyage, les orifices de séparation (12) étant nettoyés selon un régime intermittent, **caractérisé en ce que** le dispositif de nettoyage (8) est activé consécutivement à une détection d'orifices de séparation (12) partiellement ou entièrement obstrués par un détecteur optique (9), ou en se basant sur la qualité de séparation détectée.

8. Procédé selon la revendication 7, le nettoyage s'effectuant sans contact.

9. Procédé selon la revendication 7 ou 8, un ou plusieurs orifices de séparation (12) étant respectivement nettoyés avec un court jet d'air comprimé provenant d'une ou plusieurs buses à air comprimé.

10. Procédé selon l'une des revendications 7 à 9, le dispositif de nettoyage (8) étant activé à des intervalles de temps prédéfinis en se basant sur un signal d'horloge.

11. Procédé selon la revendication 10, l'intervalle de temps étant réglé en se basant sur la vitesse de rotation du disque de séparation (3a) ou du tambour de séparation (3b) et/ou sur l'arrangement des orifices de séparation (12) sur le disque de séparation (3a) ou dans le tambour de séparation (3b) et/ou en se basant sur le type de semence.
